# EUROPÄISCHE PATENTSCHRIFT

(11) **EP 2 807 059 B1**
(45) Veröffentlichungstag und Bekanntmachung des Hinweises auf die Patenterteilung: **13.04.2016**
(21) Anmeldenummer: 12780097.7
(22) Anmeldetag: 19.10.2012
(51) Int. Cl.: B60R 22/48

(54) **VERFAHREN UND AUSWERTESYSTEM ZUR ÜBERWACHUNG EINER KORREKTEN GURTBENUTZUNG**
METHOD AND EVALUATION SYSTEM FOR MONITORING THE CORRECT USE OF A BELT
PROCÉDÉ ET SYSTEME D'EVALUATION POUR SURVEILLER L'UTILISATION CORRECTE D'UN CEINTURE

(30) Priorität: 26.01.2012 DE 102012001472
(43) Veröffentlichungstag der Anmeldung: 03.12.2014
(73) Patentinhaber: Audi AG, 85045 Ingolstadt (DE)
(72) Erfinder: BRAND, Martin, 85055 Ingolstadt (DE); RIGLEY, Philip, 20357 Hamburg (DE); SETTGAST, Walter, 85101 Lenting (DE); KÜBLER, Heiko, 85122 Hitzhofen (DE)
(74) Vertreter: Brandt, Kai
(86) Internationale Anmeldenummer: PCT/EP2012/004395
(87) Internationale Veröffentlichungsnummer: WO 2013/110298

(56) Entgegenhaltungen:
- DE-A1- 19 641 548
- US-A1- 2007 222 572
- US-A1- 2009 289 443
- US-A1- 2010 283 593

## Beschreibung

Die Erfindung betrifft ein Verfahren zur Überwachung einer korrekten Gurtbenutzung in einem Kraftfahrzeug gemäß Oberbegriff des Patentanspruchs 1 sowie ein Auswertesystem zur Durchführung dieses Verfahrens gemäß Patentanspruch 7.

Es ist gesetzlich vorgeschrieben, dass die Insassen von Kraftfahrzeugen während der Fahrt Sicherheitsgurte benutzen, weshalb in modernen Kraftfahrzeugen entsprechende Überwachungssysteme installiert sind, die erkennen, ob an einem von einer Person belegten Fahrzeugsitz die Gurtzunge des zugehörigen Sicherheitsgurts in das Gurtschloss korrekt eingesetzt ist. Wird von den bekannten Überwachungssystemen festgestellt, dass an einem von einer Person benutzten Fahrzeugsitz die Gurtzunge des zugehörigen Sicherheitsgurts nicht im Gurtschloss steckt, erfolgt in wiederkehrenden Zeitabständen während der Fahrt ein Warnsignal so lange, bis die Gurtzunge des Sicherheitsgurts in das Gurtsschloss eingesetzt ist.

Das korrekte Anlegen eines Sicherheitsgurts ist in modernen Kraftfahrzeugen nicht nur wegen der Rückhaltefunktion des Sicherheitsgurts im Falle eines Unfalls wichtig, sondern auch aus Sicherheitsgründen im Hinblick auf eine möglichst gefahrlose Funktion von Airbagsystemen und Fahrerassistenzsystemen. So können beispielsweise ein adaptives Geschwindigkeits-regelsystem mit einer so genannten Stop-and-go-Funktion oder mit einem Stauassistenzsystem nur dann mit der erforderlichen Sicherheitsreserve für den Fahrer oder auch Beifahrer genutzt werden, wenn diese Personen auch tatsächlich die Sicherheitsgurte angelegt haben.

Da bei manchen Fahrern oder Insassen von Kraftfahrzeugen ein Sicherheitsbewusstsein für das Anlegen des Sicherheitsgurts fehlt, wird im täglichen Fahrzeuggebrauch von diesen Personen oftmals ein so genannter Gurtdummy in Form eines Metallblechstreifens oder einer abgeschnittenen Gurtzunge in das Gurtschloss eingesetzt, um so eine Benutzung des Sicherheitsgurts vorzutäuschen. Mit dieser Manipulation am Gurtschloss oder auch mit einer Manipulation an der Gurtschlosselektrik, wird im Fahrzeug die Gurttrageaufforderung stillgelegt. Dadurch wird außerdem vom herkömmlichen Sicherheitssystem des Kraftfahrzeugs fälschlicher Weise festgestellt, dass eine Gurtbenutzung vorliegt, obgleich beispielsweise nur ein Gurtdummy in das Gurtschloss eingesetzt ist. Das Fahrzeugsicherheitssystem kann dadurch seine Sicherheitsstrategien für den Betrieb von adaptiven Fahrerassistenzsystemen und für die Airbagsteuerung nicht an die Situation "Gurt nicht angelegt" anpassen. Systeme zur Erkennung der Fahreranwesenheit werden ausgehebelt, was zu falschen Fahrzeugsicherheitsstrategien und damit zu einer erhöhten Gefährdung führt.

Zur Erkennung der Sitzbelegung eines Fahrzeugsitzes und insbesondere des Fahrersitzes in einem Kraftfahrzeug können Sitzbelegungssensoren oder andere Insassenerkennungssysteme verwendet werden, wie diese in der DE 101 23 472 A1 angegeben sind. Derartige Erkennungssysteme können auch Gurtsensoren umfassen, die das Einstecken der Gurtzunge in das Gurtschloss überwachen, wie dies aus der DE 10 2009 011 609 A1 bekannt ist. Diese bekannten Systeme eignen sich jedoch nicht zur Erkennung einer vorgetäuschten Gurtbenutzung, bei der in das Gurtschloss eines belegten Fahrzeugsitzes eine Gurtzunge, ohne den Sicherheitsgurt zu benutzen, in das Gurtschloss eingesetzt wird.

Auch aus der US 2009/289443 A1 ist ein Verfahren zur Überwachung der Gurtbenutzung bekannt, das den geöffneten und/oder geschlossenen Gurtschlosszustand überwacht, wobei hierfür Gurt- bzw. Gurtschlosssensoren verwendet werden.

Der Erfindung liegt die Aufgabe zugrunde, ein Verfahren zur Überwachung einer korrekten Gurtbenutzung anzugeben, welches mit möglichst einfachen Mitteln eine vorgetäuschte Gurtbenutzung erkennen kann. Außerdem liegt der Erfindung die weitere Aufgabe zugrunde, ein Auswertesystem anzugeben, mit dem das erfindungsgemäße Verfahren durchführbar ist.

Die das erfindungsgemäße Verfahren betreffende Aufgabe wird mit den Merkmalen des Patentanspruchs 1 gelöst. Bevorzugte Weiterbildungen der Erfindung sind in den Unteransprüchen offenbart.

Das Verfahren gemäß Patentanspruch 1 sieht die Erkennung einer vorgetäuschten Gurtbenutzung durch eine Auswertung der zeitlichen Abfolge von Gurtschlossbetätigungen in Bezug auf weitere am Kraftfahrzeug festgestellte Vorgänge und/oder Zustände vor. Dabei sind unterschiedliche Erkennungsstrategien denkbar, die im Wesentlichen darauf beruhen, dass unlogische Gurtschlossbetätigungen, zu denen auch eine Dauer-Gurtschlossbetätigung gehört, zumindest ein Indiz für einen nicht korrekt angelegten Sicherheitsgurt dienen. Eine derartige unlogische Gurtschlossbetätigung besteht beispielsweise darin, dass das Gurtschloss dauernd geschlossen ist, obgleich der Motor abgestellt, der Fahrersitz nicht mehr belegt ist und die Fahrertür von außen geschlossen wird. Dabei besteht ein wesentlicher Vorteil des erfindungsgemäßen Verfahrens darin, dass keine zusätzlichen Sensoren oder sonstige zusätzliche Bauteile zur Durchführung des Verfahrens erforderlich sind. Vielmehr genügt es, vorhandene Ereignisinformationen und/oder Zustandsinformationen, die beispielsweise ohnehin über einen Datenbus zur Fahrzeugsteuerung übertragen werden, zur Überwachung und Erkennung einer vorgetäuschten Gurtbenutzung ausgewertet werden.

Bereits eine von außen entriegelte Fahrertüre bei bereits geschlossenem Gurtschloss am Fahrersitz kann auf eine Gurtmanipulation hinweisen und als solche von einem Auswertesystem, welches Teil des Sicherheitssystems des Kraftfahrzeugs sein kann, erkannt werden.

Auch das Öffnen der Fahrertüre mit nachfolgendem Fahrbetrieb lässt auf eine nicht korrekte Gurtbenutzung schließen, wenn in dem entsprechenden Zeitraum keine Betätigung bzw. Zustandsänderung am Gurtschloss festgestellt werden kann.

Ein Hinweis auf eine Gurtmanipulation ist auch dann gegeben, wenn am Fahrergurtschloss über mehrere Fahrzyklen hinweg mit Öffnen und Schließen der Fahrertüre keine Zustandsänderungen am Fahrergurtschloss auftreten. Dabei kann die Überwachung einer korrekten Gurtbenutzung anhand von einzelnen Überwachungskriterien erfolgen, oder aber auch durch Auswertung mehrerer unterschiedlicher Überwachungskriterien, die in der Gesamtkombination ausgewertet und zur Auslösung entsprechender Warnsignale und/oder zur Beeinflussung von Fahrzeugsicherheitssystemen herangezogen werden.

Auch das Abschließen einer Fahrzeugtür von außen in Verbindung mit einem ständig geschlossenen Gurtschloss weist ebenfalls auf eine Gurtmanipulation bzw. Gurtschlossmanipulation hin.

Bei dem Verfahren zur Erkennung einer korrekten Gurtbenutzung kann auch die zeitliche Abfolge von Gurtschlossbetätigungen überwacht werden. So kann ein Öffnen mit kurz darauf erfolgtem Schließen des Sicherheitsgurts auf eine Pseudobenutzung des Sicherheitsgurtes hinweisen, insbesondere wenn es sich dabei um sehr kurze Gurtschloss-Öffnungszeiten von beispielsweise weniger als fünf Sekunden handelt.

Das erfindungsgemäße Verfahren bietet die Möglichkeit, bei Erkennung einer vorgetäuschten Gurtbenutzung beispielsweise die adaptive Geschwindig-keitsregelung und/oder Start-Stop-Systeme zu beeinflussen oder zu deaktivieren, soweit dies zu einer Verbesserung der Sicherheit bei nicht angelegtem Sicherheitsgurt dient.

In entsprechender Weise können bei vorgetäuschter Gurtbenutzung die Airbagsysteme so angesteuert werden, dass diese trotz nicht verwendeter Sicherheitsgurte eine möglichst optimale Sicherheitsfunktion für die Fahrzeuginsassen bieten.

Eine bevorzugte Weiterbildung sieht vor, dass bei dem Verfahren zu einer erkannten vorgetäuschten Gurtbenutzung eine entsprechende Kennung abgespeichert wird, die vom Fahrzeugsystem beim nächsten Motorstart abgefragt und zur Steuerung von relevanten Sicherheitssystemen berücksichtigt werden kann. Diese abgespeicherte Kennung kann auch vorzugsweise von einem externen Lesegerät ausgelesen werden. Damit lassen sich beim Fahrzeugservice auf sehr einfache Weise eventuell vorgenommene elektrische Manipulationen an der Gurtschlosssensorik feststellen.

Die der Erfindung zugrunde liegende weitere Aufgabe hinsichtlich des Auswertesystems wird mit den Merkmalen des Patentanspruchs 7 gelöst. Das Auswertesystem besitzt einen Speicher oder einen Gurtschloss-Zustandszähler, der die zeitliche Abfolge von Öffnung- und Schließvorgängen zu wenigstens einem Gurtschloss des Kraftfahrzeugs speichert. In Verbindung mit weiteren Fahrzeugereignissen und/oder Fahrzeugzuständen kann eine vorgetäuschte Gurtbenutzung erkannt werden. Mittels des Gurtschloss-Zustandszählers kann insbesondere festgestellt werden, ob eine Statusänderung von "Gurt zu" nach "Gurt auf" und umgekehrt erfolgt ist. Der Gurtschloss-Zustandszähler kann vorzugsweise im Steuergerät des Kraftfahrzeugs integriert sein, so dass keine zusätzlichen Steuerungs- und/oder Speichermittel erforderlich sind. Der Inhalt des Speichers bzw. der Zustand des Gurtschloss-Zustandszählers kann über ein Diagnosesystem oder ein sonstiges Lesegerät am Kraftfahrzeug ausgelesen werden.

Die Erfindung wird nachfolgend anhand eines in der Zeichnung dargestellten Ausführungsbeispiels näher erläutert.

Es zeigen:
- Fig. 1: ein vereinfachtes Blockschaltbild zur Veranschaulichung des Zusammenwirkens des erfindungsgemäßen Auswertesystems mit dem Sicherheitssystem eines Kraftfahrzeugs und
- Fig. 2: ein Blockschaltbild einer Verknüpfungslogik zur Erläuterung des erfindungsgemäßen Verfahrens.

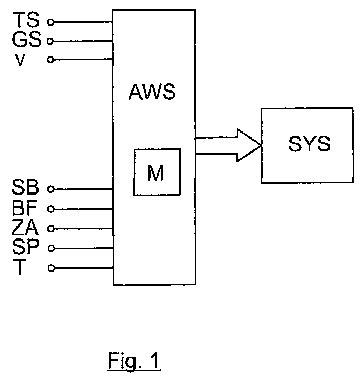

Das in Figur 1 dargestellte Blockschaltbild umfasst ein Auswertesystem AWS, dem eingangsseitig Türschlosssignale TS, Gurtschlosssignale GS und weitere am Kraftfahrzeug auftretende Vorgänge und/oder Zustände kennzeichnende Signale übermittelt werden. Zu diesen weiteren Signalen gehören die aktuelle Fahrzeuggeschwindigkeit v, ein Sitzbelegungssignal SB, Brems- und Fahrpedalsignale BF, das Zündanlasssignal ZA, ein die örtliche Position des Fahrzeugschlüssel kennzeichnendes Schlüsselpositionssignal SP und ein Zeitsignal T. In einen im Auswertesystem AWS angeordneten Speicher M, mit dem auch die Funktion eines Gurtschloss-Zustandszählers realisierbar ist, können sämtliche eingangseitig auftretenden Signale mit einer zeitlichen Zuordnung abgespeichert werden. Das Auswertesystem AWS kann somit die unterschiedlichen Signale einer logischen Überprüfung unterziehen und dadurch insbesondere feststellen, ob eine Gurtschlossbetätigung oder ein vorhandener Gurtschlosszustand, beispielsweise geschlossenes Gurtschloss, unter Berücksichtigung der weiteren eingangsseitig auftretenden Signale TS, v, SB, BF, ZA, SP und T auf eine korrekte oder eine manipulierte Gurtbenutzung schließen lässt. Wird beispielsweise bei ständig geschlossenem Gurtschloss ein diesen Zustand kennzeichnendes Gurtschlosssignal GS an das Auswertesystem AWS übermittelt und tritt gleichzeitig an der entsprechenden Fahrzeugtür ein Türsignal TS auf, welches das Verschließen der Fahrzeugtüre von außen kennzeichnet, so kann das Auswertsystem AWS daraus auf eine manipulierte bzw. vorgetäuschte Gurtbenutzung schließen und das Sicherheitssystem SYS des Kraftfahrzeugs darüber informieren. Daraufhin kann das Sicherheitssystem SYS beispielsweise Systeme abschalten, die bei nicht ordnungsgemäß getragenem Sicherheitsgurt eine Gefährdung für die jeweilige Person oder die jeweiligen Personen darstellen würden.

Das Auswertesystem AWS kann ebenso, wie der Speicher M, integrierter Bestandteil der im Kraftfahrzeug ohnehin vorhandenen Steuerungssysteme sein, so dass eine Erkennung, ob ein Sicherheitsgurt korrekt oder nur vorgetäuscht benutzt wird, durch eine Überwachung der zeitlichen Abfolge der Signale TS, GS, v, SB, BF, ZA, SP und T durchgeführt werden. Dabei ist es nicht unbedingt erforderlich, dass sämtliche dieser Signale bei deren Auswertung berücksichtigt werden, jedoch wird eine besonders hohe Zuverlässigkeit bei der Erkennung, ob eine vorgetäuschte Gurtbenutzung vorliegt oder nicht, durch Auswertung möglichst vieler dieser Signale erreicht, da damit auch raffiniertere technische Manipulationen im Zusammenhang mit einer vorgetäuschten Gurtbenutzung aufgedeckt werden können.

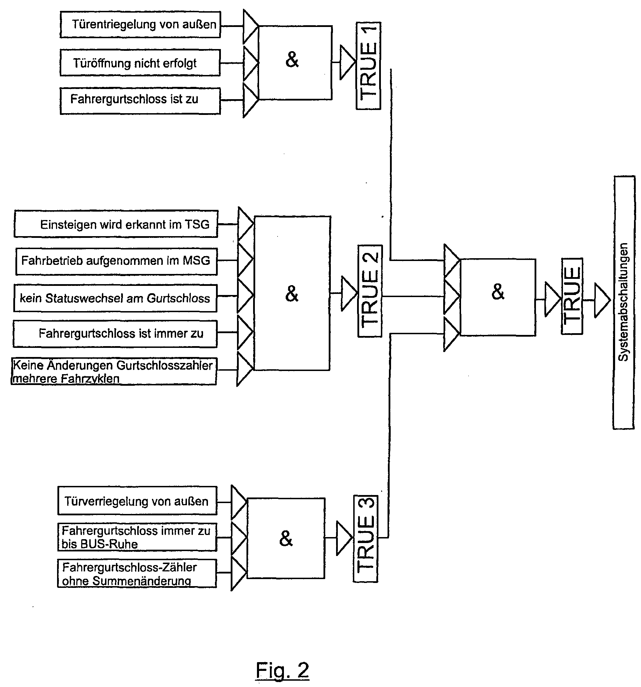

Nachfolgend wird nun anhand von Figur 2 beispielhaft ein Verfahren zur Erkennung einer vorgetäuschten Gurtbenutzung beschrieben. Bei dem hier dargestellten Ausführungsbeispiel werden unterschiedliche Ereignisse und Zustände in einem Kraftfahrzeug durch logische UND-Verknüpfungen 1, 2, 3 überwacht. Mit der UND-Verknüpfung 1 wird geprüft, ob eine Türentriegelung von außen vorliegt und bei noch nicht geöffneter Tür das Fahrergurtschloss bereits als geschlossen angezeigt wird. Trifft dies zu, so ergibt die UND-Verknüpfung 1 eine Bestätigung TRUE1, die bereits einen Hinweis auf eine vorgetäuschte Gurtbenutzung signalisiert.

Mittels einer weiteren UND-Verknüpfung 2 wird überprüft, ob ein Einsteigevorgang über ein Türschlosssteuergerät TSG erkannt wird und der Fahrbetrieb aufgenommen wurde und kein Statuswechsel am Gurtschloss vorliegt und das Fahrergurtschloss immer geschlossen ist und an einem Gurtschlosszähler keine Zählerstandsänderungen über mehrere Fahrtzyklen vorliegen. Stellt die logische UND-Verknüpfung 2 fest, dass alle diese Ereignisse und Zustände zutreffen, führt dies zu einer Bestätigung TRUE2, die einen weiteren Hinweis auf eine vorgetäuschte Gurtbenutzung signalisiert.

Über eine weitere logische UND-Verknüpfung 3 wird außerdem überwacht, ob eine Türverriegelung von außen vorliegt und das Fahrergurtschloss immer bis zur Abschaltung des Bussystems vorliegt und am Fahrergurtschloss-Zähler keine Summenänderung festzustellen ist. Treffen alle diese Ereignisse und Zustände zu, ergibt die logische UND-Verknüpfung 3 eine Bestätigung TRUE3, die einen weiteren Hinweis auf eine vorgetäuschte Gurtbenutzung signalisiert.

Die Bestätigungen TRUE1 bis TRUE3 werden über eine vierte UND-Verknüpfung 4 überwacht, so dass erst bei gleichzeitigem Vorliegen der Bestätigungen TRUE1 bis TRUE3 insgesamt die Bestätigung TRUE abgeleitet wird, die dann zu Systemabschaltungen und/oder Systembeeinflussungen im Sicherheitssystem des Kraftfahrzeugs führt. Liegt die Bestätigung TRUE vor, wird also auf das Vorhandensein einer vorgetäuschten Gurtbenutzung geschlossen und das Sicherheitssystem des Kraftfahrzeugs darüber informiert. Dies kann nicht nur zur Abschaltung oder Änderung von im Kraftfahrzeug verwendeten Sicherheitssystemen führen, sondern auch zur Auslösung von optischen und/oder akustischen Warnsignalen führen.

Grundsätzlich besteht aber auch die Möglichkeit, bereits die Bestätigungen TRUE1 bis TRUE3 jeweils alleine zur Auslösung von optischen und/oder akustischer Warnsignalen heranzuziehen und/oder auf deren Basis bereits Eingriffe an Komfort- oder Sicherheitssystemen des Kraftfahrzeugs vorzunehmen.

## Patentansprüche

1. Verfahren zur Überwachung einer korrekten Gurtbenutzung von wenigstens einem Sicherheitsgurt in einem Kraftfahrzeug, wobei an dem jeweiligen Gurtschloss eines von einer Person belegten Fahrzeugsitzes der geöffnete und/oder geschlossene Gurtschlosszustand überwacht wird und bei Erkennung eines nicht geschlossenen Gurtschlosses ein Warnsignal und/oder eine Beeinflussung des Sicherheitssystems des Kraftfahrzeugs erfolgt, wobei eine Erkennung einer vorgetäuschten Gurtbenutzung durch eine Auswertung von Gurtschlossbetätigungen in Bezug auf weitere am Kraftfahrzeug festgestellte Vorgänge und/oder Zustände erfolgt, **dadurch gekennzeichnet, dass** eine zeitliche Abfolge von Gurtschlossbetätigungen in Verbindung mit Türbetätigungen zur Erkennung einer vorgetäuschten Gurtbenutzung ausgewertet wird, undeine vorgetäuschte Gurtbenutzung am Fahrersitz festgestellt wird,
a) wenn die Fahrertür von außen entriegelt wurde und bereits das Gurtschloss am Fahrersitz geschlossen ist, bevor die entriegelte Fahrertür geöffnet wurde; und/oder
b) wenn das Öffnen der Fahrertüre erkannt und danach der Fahrbetrieb aufgenommen wird, ohne dass eine Betätigung am Gurtschloss erfolgt; und/oder
c) wenn am Fahrergurtschloss bei mehreren Fahrzyklen mit Türbetätigungen keine Zustandsänderung erfolgt; und/oder
d) wenn eine Türverriegelung von außen erfolgt und das jeweils zugehörige Gurtschloss bis zur Abschaltung des gesamten Sicherheitssystems immer den geschlossenen Zustand meldet.

2. Verfahren nach einem der vorhergehenden Ansprüche, **dadurch gekennzeichnet, dass** ein Öffnen eines Sicherheitsgurts für einen kurzen Öffnungszeitraum mit danach erfolgtem Schließen des Sicherheitsgurts als Pseudogurtbenutzung bei der Auswertung der Betätigungen des Sicherheitsgurts unberücksichtigt bleibt.

3. Verfahren nach Anspruch 2, **dadurch gekennzeichnet, dass** als kurzer Öffnungszeitraum ein Zeitraum von wenigen Sekunden angesehen wird, insbesondere ein Zeitraum, der kleiner ist als fünf Sekunden ist.

4. Verfahren nach einem der vorhergehenden Ansprüche, **dadurch gekennzeichnet, dass** bei Erkennung einer vorgetäuschten Gurtbenutzung die adaptive Geschwindigkeitsregelung und/oder Start-Stop-Systeme beeinflusst oder deaktiviert werden.

5. Verfahren nach einem der vorhergehenden Ansprüche, **dadurch gekennzeichnet, dass** bei Erkennung einer vorgetäuschten Gurtbenutzung die Ansteuerung zugehöriger Airbagsysteme beeinflusst wird.

6. Verfahren nach einem der vorhergehenden Ansprüche, **dadurch gekennzeichnet, dass** zu einer erkannten vorgetäuschten Gurtbenutzung eine Kennung in einem Speicher (M) abgespeichert wird, die beim nächsten Motorstart abgefragt und zur Steuerung von relevanten Sicherheitssystemen berücksichtigt wird.

7. Auswertesystem zur Durchführung des Verfahrens nach einem der vorhergehenden Ansprüche, wobei ein Gurtschlosssignal (GS) den geöffneten oder geschlossenen Gurtschlosszustand an das Auswertesystem (AWS) meldet, wobei das Auswertesystem (AWS) einen Speicher (M) oder eine andere als Gurtschloss-Zustandszähler geeignete Einrichtung hat, **dadurch gekennzeichnet, dass** der Speicher (M) die zeitliche Abfolge von Öffnungs- und Schließvorgängen zu wenigstens einem Gurtschloss speichert, und dass das Auswertesystem (AWS) die festgestellten Gurtschlosszustände unter Berücksichtigung von Türschlossbetätigungen und weiterer Ereignisse und Zustände des Kraftfahrzeugs auswertet.

8. Auswertesystem nach Anspruch 7, **dadurch gekennzeichnet, dass** der Speicher (M) zur Speicherung einer das Vortäuschen einer Gurtbenutzung kennzeichnenden Kennung vorgesehen ist, und dass die Kennung zu Steuerungszwecken und/oder bei der Durchführung von Servicearbeiten aus dem Speicher (M) abfragbar ist.

9. Auswertesystem nach Anspruch 7, **dadurch gekennzeichnet, dass** hängende Gurtschlösser im geschlossenen Gurtschlosszustand erkannt werden und in der Werkstatt ausgelesen und erneuert werden können.

## Claims

1. Method for monitoring correct belt utilisation of at least one safety belt in a motor vehicle, in which the non-fastened or fastened status of the belt buckle of a seat occupied by a person is monitored, a warning signal is given and/or influence exerted over the vehicle safety system if a buckle is detected as being unfastened, and simulated utilisation of the belt is detected by evaluation of the belt buckle operations in relation to other events and/or statuses determined in the vehicle, **characterised in that** the chronological sequence of belt buckle operations in conjunction with door operations is evaluated in order to detect simulated belt utilisation, and simulated use of the belt at the driver's seat is established:
a) if the driver's door is unlocked from outside and the driver's seat belt buckle is already fastened before the unlocked driver's door is opened; and/or
b) if opening of the driver's doors is detected and the vehicle is then driven without the belt buckle being operated; and/or
c) if no change in status occurs at the driver's belt buckle over several driving cycles with door operation; and/or
d) if the door is locked from outside and the associated belt buckle continues to report its status as fastened until the entire safety system is shut down.

2. Method according to one of the above claims, **characterised in that** unfastening the safety belt so that it is unfastened for a short period followed by fastening the safety belt as pseudo-utilisation of the belt is disregarded by the evaluation of the safety belt operations.

3. Method according to claim 2, **characterised in that** a short unfastened period is regarded as a period of a few seconds, in particular a period smaller than 5 seconds.

4. Method according to one of the above claims, **characterised in that** when simulated belt utilisation is detected, the adaptive speed control and/or start-stop systems are influenced or deactivated.

5. Method according to one of the above claims, **characterised in that** when simulated belt utilisation is detected, activation of associated airbag systems is influenced.

6. Method according to one of the above claims, **characterised in that** when simulated belt utilisation is detected a marker is set in a memory (M) which is interrogated at the next engine start and taken into consideration for actuating relevant safety systems.

7. Evaluation system for implementing a method according to one of the above claims, in which a belt buckle signal (GS) reports the unfastened or fastened buckle status to the evaluation system (AWS), which said evaluation system (AWS) possesses a memory (M) or other device suitable for counting buckle fastening events, **characterised in that** the memory (M) stores the chronological sequence of fastening and unfastening operations for at least one belt buckle, and the evaluation system (AWS) evaluates the belt buckle statuses taking door closing operations and other events and statuses of the vehicle into consideration.

8. Evaluation system according to claim 7, **characterised in that** the memory (M) is provided to store a marker denoting simulated belt utilisation, and that the marker can be interrogated from the memory (M) for control purposes and/or when carrying out service work.

9. Evaluation system according to claim 7, **characterised in that** hanging belt buckles when the belt buckle status is fastened are detected and can be read out and replaced in the workshop.

## Revendications

1. Procédé de surveillance de l'utilisation correcte d'au moins une ceinture de sécurité dans un véhicule automobile, dans lequel on surveille l'état ouvert et/ou fermé de la boucle de la ceinture dans le cadre de la boucle de ceinture respective d'un siège de véhicule occupé par une personne et, lors de l'identification d'une boucle de ceinture non fermée, il se produit un signal d'alarme et/ou une intervention du système de sécurité du véhicule automobile, dans lequel il se produit une identification de l'utilisation simulée de la ceinture par une interprétation de commandes de boucles de ceinture sur la base d'autres processus et/ou états fixés sur le véhicule automobile, **caractérisé en ce que** l'on interprète une série temporelle de commandes de boucles de ceinture en liaison avec des commandes de portes pour identifier une utilisation simulée de la ceinture et l'on établit une utilisation simulée de la ceinture sur le siège du conducteur,
a) si la porte du conducteur est déverrouillée de l'extérieur et que la boucle de la ceinture est déjà fermée sur le siège du conducteur avant que la porte du conducteur déverrouillée ne soit ouverte ; et/ou
b) si l'ouverture des portes du conducteur est identifiée et qu'ensuite le démarrage est enregistré sans qu'une commande ne se fasse au niveau de la boucle de la ceinture ; et/ou
c) s'il ne se produit pas de modification d'état sur la boucle de la ceinture du conducteur dans le cadre de plusieurs cycles de conduite avec des commandes de portes ; et/ou
d) si un verrouillage de porte se fait de l'extérieur et que la boucle de ceinture respectivement associée signale toujours l'état fermé jusqu'à la déconnexion de la totalité du système de sécurité.

2. Procédé selon l'une quelconque des revendications précédentes, **caractérisé en ce qu'**une ouverture d'une ceinture de sécurité reste non prise en compte pendant un court intervalle de temps d'ouverture suivi d'une fermeture de la ceinture de sécurité comme pseudo-utilisation de la ceinture lors de l'interprétation des commandes de la ceinture de sécurité.

3. Procédé selon la revendication 2, **caractérisé en ce que** l'on considère comme espace de temps d'ouverture court un espace de temps de quelques secondes, en particulier un espace de temps qui est plus petit que cinq secondes.

4. Procédé selon l'une quelconque des revendications précédentes, **caractérisé en ce que**, lors de l'identification d'une utilisation simulée de la ceinture, la régulation de vitesse adaptative et/ou les systèmes de démarrage et d'arrêt sont influencés ou désactivés.

5. Procédé selon l'une quelconque des revendications précédentes, **caractérisé en ce que**, lors de l'identification d'une utilisation simulée de la ceinture, la commande des systèmes d'airbag associés est influencée.

6. Procédé selon l'une quelconque des revendications précédentes, **caractérisé en ce que**, lors d'une utilisation simulée identifiée de la ceinture, on mémorise un indicatif dans une mémoire (M), qui est interrogée lors du démarrage suivant du moteur et est prise en compte pour la commande des systèmes de sécurité pertinents.

7. Système d'interprétation pour réaliser le procédé selon l'une quelconque des revendications précédentes, dans lequel un signal de boucle de ceinture (GS) notifie l'état ouvert ou fermé de la boucle de ceinture sur le système d'interprétation (AWS), dans lequel le système d'interprétation (AWS) présente une mémoire (M) ou un autre dispositif convenant comme compteur d'états de la boucle de ceinture, **caractérisé en ce que** la mémoire (M) mémorise la série temporelle de processus d'ouverture et de fermeture d'au moins une boucle de ceinture et le système d'interprétation (AWS) interprète les états établis de la boucle de ceinture en tenant compte de commandes de fermeture de porte et d'autres événements et/ou états du véhicule automobile.

8. Système d'interprétation selon la revendication 7, **caractérisé en ce que** la mémoire (M) est prévue pour mémoriser un indicatif caractérisant la simulation d'une utilisation de la ceinture et l'indicatif peut être interrogé dans la mémoire (M) à des fins de commande et/ou lors de la réalisation de travaux d'entretien.

9. Système d'interprétation selon la revendication 7, **caractérisé en ce que** les boucles de ceinture suspendues à l'état fermé des boucles de ceinture peuvent être identifiées, testées et remises à neuf à l'atelier.
